# EUROPÄISCHE PATENTSCHRIFT

(11) **EP 3 578 867 B1**
(45) Veröffentlichungstag und Bekanntmachung des Hinweises auf die Patenterteilung: **20.01.2021**
(21) Anmeldenummer: 19173301.3
(22) Anmeldetag: 08.05.2019
(51) Int. Cl.: F16P 3/14

(54) **SENSORSYSTEM MIT OPTOELEKTRONISCHEN DISTANZSENSOREN**
SENSOR SYSTEM WITH OPTOELECTRONIC DISTANCE SENSORS
SYSTÈME DE DÉTECTEURS POURVU DE DÉTECTEURS DE DISTANCE OPTOÉLECTRONIQUES

(30) Priorität: 05.06.2018 DE 102018113359
(43) Veröffentlichungstag der Anmeldung: 11.12.2019
(73) Patentinhaber: SICK AG, 79183 Waldkirch (DE)
(72) Erfinder: Steinkemper, Heiko, 79183 Waldkirch (DE); Hofmann, Christoph, 79183 Waldkirch (DE); Druzella, Ulrich, 79183 Waldkirch (DE); Ramachandra, Sanketh, 79183 Waldkirch (DE)

(56) Entgegenhaltungen:
- DE-A1-102004 041 821
- DE-B3-102017 105 999
- DE-U1-202017 100 522
- US-A1- 2017 030 708

## Beschreibung

Die vorliegende Erfindung betrifft ein Sensorsystem mit optoelektronischen Distanzsensoren.

Die DE 10 2015 112 656 A1 offenbart eine Vielzahl von optoelektronischen Distanzsensoren an einem bewegbaren Maschinenteil.

Zur Umsetzung einer räumlichen und/oder zeitlichen engen Zusammenarbeit von Mensch und Roboter, beispielsweise einer Mensch-Roboter-Kollaboration ist ein Umdenken in der Absicherung von Robotern bzw. bewegbaren Maschinenteilen notwendig. Ein erster Schritt ist z. B. leistungs- und kraftbegrenzte Roboter. Doch auch diese können das Risiko, das von einem am End-of-arm montierten Endeffektor oder einem durch den Roboter transportierten Werkstück ausgeht nicht zwangsläufig auf ein akzeptables Restrisiko minimieren.

Die in der DE 10 2015 112 656 A1 offenbarte Sensoranordnung weist auch bei linienförmiger oder flächiger Ausbildung der Schutzfelder Lücken zwischen den Schutzfeldern der Einzelsensoren auf. Ein Objekt, welches sich einmal ortsfest in einer dieser Lücken befindet, wird auch im Verlauf einer üblicherweise geradlinigen Annäherung an die Gefahrstelle nicht detektiert.

Darüber hinaus wird in der DE 10 2015 112 656 A1 nur eine Anpassung des Schutzfeldes an das Werkzeug geschützt, nicht aber an das geladene Werkstück, von dem in bestimmten Situationen ebenfalls eine Gefahr ausgehen kann.

Die DE102017105999B3 betrifft ein Sensorsystem für einen mehrgliedrigen Roboter, umfassend mehrere an dem Roboter verteilt angeordnete Sensoren, die kommunikativ mit einer Mastereinheit verbunden sind, die zur Weiterleitung von den Sensoren gesammelter Messdaten mit einer Steuereinrichtung verbunden ist, wobei die Mastereinheit an einer Werkzeugeinheit des Roboters an die Form des Roboters angepasst positioniert ist und über ein Kabel mit der Steuereinrichtung verbunden ist.

Die US20170030708A1 offenbart einen sicheren optoelektronischen Distanzsensor zur Überwachung eines Gefahrenbereichs an einem bewegbaren Maschinenteil mit einem Schutzbereich, wobei der sichere Distanzsensor an dem bewegbaren Maschinenteil angeordnet ist, wobei an dem bewegbaren Maschinenteil ein Werkzeug angeordnet ist, wobei eine Vielzahl von Distanzsensoren modular angeordnet sind und der Schutzbereich an das Werkzeug angepasst ist, wobei der Distanzsensor ein Lichtlaufzeitsensor ist, wobei ein Lichtempfänger des Distanzsensors mindestens ein Array aus Einzelphotonenlawinendioden aufweist.

Eine Aufgabe der Erfindung besteht darin, ein verbessertes Schutzfeld an einem Roboterarm bereitzustellen.

Die Aufgabe wird gemäß Anspruch 1 gelöst durch ein Sensorsystem mit optoelektronischen Distanzsensoren zur Überwachung eines Gefahrenbereichs an einem bewegbaren Maschinenteil mit mindestens einem Schutzfeld.

Weiter wird die Aufgabe gelöst gemäß Anspruch 2 durch ein Sensorsystem (1) mit optoelektronischen Distanzsensoren (2) zur Überwachung eines Gefahrenbereichs (3) an einem bewegbaren Maschinenteil (4) mit mindestens einem Schutzfeld (5), wobei die optoelektronischen Distanzsensoren (2) ringförmig in einem ersten Ring (6) an dem bewegbaren Maschinenteil (4) angeordnet sind, wobei an dem bewegbaren Maschinenteil (4) ein Werkzeug (4) und/oder ein Werkstück angeordnet ist, wobei die Distanzsensoren (2) rotierbar an dem Ring (6) angeordnet sind.

Das Sensorsystem dient zum sicheren Überwachen des Gefahrenbereich bzw. eines Überwachungsbereichs des bewegbaren Maschinenteils.

Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN13849 geregelt. Die Sicherheit wird beispielsweise durch einen zweikanaligen oder zweikanalig diversitären Aufbau einer Auswerteeinheit zur Fehleraufdeckung und zur Funktionsprüfung gewährleistet. Der abstandsmessende Sensor bzw. Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der Sensor bzw. Distanzsensor optional über eine Sensortestung.

Die Auswerteeinheit erkennt Schutzfeldverletzungen und kann ein sicherheitsgerichtetes Abschaltsignal ausgeben, um eine gefahrbringende Bewegung des Teils zu stoppen bzw. das Teil abzubremsen. Das kann z. B. über sichere Schaltsignale, z.B. OSSD-Signale (Output Safety Switching Device-Signale) oder sichere Distanzdaten, Abstandsdaten bzw. sichere Ortsdaten des Eingriffsereignisses realisiert werden. Beispielsweise ist die Auswerteeinheit zweikanalig ausgebildet.

Die mehreren Distanzsensoren sind mit einer Auswerteeinheit zur Auswertung der Distanzsensoren verbunden.

Die Distanzsensoren sind entlang dem Ring beabstandet zueinander angeordnet, wobei die Sensoren ein flächiges Schutzfeld bilden, welches sich beispielsweise zylinderförmig oder kegelstumpfförmig bzw. in Form eines Rotationshyperboloid erstreckt.

Optional weisen die Distanzsensoren gleichmäßige Abstände auf. Durch die gleichmäßigen Abstände der Sensoren und eine jeweils identische Winkelausrichtung der Detektionsstrahlen wird eine nahezu gleichmäßige Auflösung innerhalb des Schutzfeldes erreicht.

Die Sensoren sind berührungslos wirkende abstandsmessende Distanzsensoren, wobei die Sensoren einen Detektionsstrahl zum Erfassen von Objekten im Überwachungsbereich aufweisen. Die Detektionsstrahlen bzw. die optischen Achsen der Distanzsensoren sind jeweils in einem spitzen Winkel α jeweils tangential zur Kreisform angeordnet.

Die Distanzsensoren können jeweils ein linienförmiges oder flächiges Schutzfeld aufweisen. Das flächige Schutzfeld ist fächerförmig ausgebildet mit einem bestimmten Öffnungswinkel von beispielsweise 2° bis 20°.

Die Überwachung erfolgt mit einer Anzahl einfacher, eindimensional tastender Distanzmesssensoren unter Ausnutzung der Bewegung des Maschinenteils und einer Ausrichtung der Sensoren, bei der die Tastrichtung in einem Winkel zur Bewegungsrichtung des Teils steht.

Die Schrägstellung der optischen Achsen der Distanzsensoren führt zu einer Dynamisierung der Schutzfeldlücken bzw. Schutzmantellücken und ermöglicht so eine Detektion von Objekten, die sich in diesen Lücken befinden bei Annäherung des Maschinenteils an ein Objekt.

Unter der Annahme, dass eine Bewegung des Schutzfeldes meist in Richtung der Mittelachse des bewegbaren Maschinenteils bzw. senkrecht zur Ebene des Ringes erfolgt und nicht quer zum Schutzfeld, stellt das Sensorsystem sicher, dass ein definiertes Objekt spätestens nach dem Zurücklegen einer bestimmten Strecke des bewegbaren Maschinenteils detektiert wird. Diese Strecke kann beispielsweise als Bremszone definiert werden.

Aufgrund des Winkels zwischen Detektionsstrahl und Bewegungsrichtung verschiebt sich der Taststrahl bei Annäherung des Maschinenteils relativ zu einem statischen Objekt im Überwachungsbereich.

Der spitze Winkel α beträgt beispielsweise 30° bis 85°, vorzugsweise 60 bis 80°, besonders bevorzugt 45°.

Der Winkel ist dabei abhängig von dem Abstand der optischen Achsen der Detektionsstrahlen bzw. dem Abstand der Distanzsensoren und der Länge des Überwachungsbereiches. Weiter ist der Abstand der Sensoren abhängig von der zu detektierenden Objektgröße.

Optional ist der Winkel der Sensoren einstellbar. Der Winkel α kann beispielsweise dynamisch verändert werden.

Beispielsweise sind die Distanzsensoren Lichtlaufzeitsensoren. Ein Lichtlaufzeitsensor bzw. ein Distanzsensor bzw. ein Lichttaster nach dem Lichtlaufzeitprinzip weist mindestens einen Lichtsender auf, der aufeinanderfolgende Lichtimpulse in einen Messbereich bzw. Überwachungsbereich aussendet und mindestens einen Lichtempfänger, welcher die an einem Objekt im Messbereich zurückgeworfenen Lichtimpulse aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtimpulses ein für den Abstand des Objektes zum Lichttaster repräsentatives Abstandssignal ermittelt.

Zur Erzeugung eines quasi geschlossenen Schutzmantels bzw. Schutzfeldes aus den Distanzsensoren ist eine Anpassung der Sensoranzahl vorgesehen. Es kann beispielsweise die Sensoranzahl verändert werden. Je mehr Distanzsensoren angeordnet werden, desto dichter liegen die optischen Achsen der Distanzsensoren nebeneinander, wodurch das Schutzfeld eine höhere Auflösung aufweist.

Die Wellenlänge des ausgesendeten Lichts der Distanzsensoren ist vorzugsweise eine für das menschliche Auge unsichtbare Wellenlänge, beispielsweise Infrarotlicht. Dadurch wird ein gezieltes Eingreifen in mögliche Schutzlücken erschwert, da diese nicht sichtbar sind.

Gemäß der zweiten Alternative der Erfindung sind die Sensoren rotierbar an dem Ring angeordnet.

Die Rotation der optischen Achsen der Distanzsensoren führt zu einer Dynamisierung der Schutzfeldlücken bzw. Schutzmantellücken und ermöglicht so eine Detektion von Objekten, die sich in diesen Lücken befinden während der der Rotationsbewegung. Das Sensorsystem sichert, dass ein definiertes Objekt spätestens nach einer bestimmten Zeit detektiert wird. Diese Zeit hängt dann vom Rotationsweg bzw. von der Rotationsgeschwindigkeit ab.

In Weiterbildung der Erfindung weisen die optischen Achsen der Distanzsensoren zu einer Mittelachse des bewegbaren Maschinenteils jeweils einen identischen spitzen Winkel auf. Dadurch wird ein kegelstumpfförmiges Schutzfeld gebildet. Je kleiner der Winkel ist, desto spitzer ist der Kegelstumpf ausgebildet. Dadurch kann das Schutzfeld noch präziser an ein Werkzeug oder ein Werkstück angepasst werden. Je kleiner der Abstand zwischen einem Werkstück/Greifer und Hintergrund ist, desto kleiner sollte die Annäherungsgeschwindigkeit werden und somit auch das umhüllte Schutzvolumen.

In Weiterbildung der Erfindung sind die optischen Achsen der Distanzsensoren sternförmig und parallel zu einer Ebene des Ringes ausgerichtet. Dadurch wird ein ebenes ringförmiges Schutzfeld gebildet, um Kollisionen bei einer Bewegung in Richtung der Ebene des Ringes zu erkennen und zu vermeiden.

Nach der Erfindung sind zweite optoelektronische Distanzsensoren ringförmig in einem zweiten Ring an dem bewegbaren Maschinenteil angeordnet. Dadurch kann ein zweites Schutzfeld erzeugt werden, welches beispielsweise vor dem ersten Schutzfeld angeordnet ist oder auch zusammen mit den ersten optoelektronischen Distanzsensoren ein komplexeres Schutzfeld bildet. So ist es beispielsweise möglich, ein doppelkegelstumpfförmiges Schutzfeld zu bilden.

In Weiterbildung der Erfindung bildet ein Teil der optoelektronischen Distanzsensoren ein Warnfeld. Die anderen optoelektronischen Distanzsensoren bilden ein Schutzfeld. Dadurch kann ein Warnfeld erzeugt werden, welches beispielsweise vor dem ersten Schutzfeld angeordnet ist.

In Weiterbildung der Erfindung sind die Sensoren rotierbar an dem Ring angeordnet.

Die Rotation der optischen Achsen der Distanzsensoren führt zu einer Dynamisierung der Schutzfeldlücken bzw. Schutzmantellücken und ermöglicht so eine Detektion von Objekten, die sich in diesen Lücken befinden während der Rotationsbewegung.

Das Sensorsystem sichert, dass ein definiertes Objekt spätestens nach einer bestimmten Zeit detektiert wird. Diese Zeit hängt dann vom Rotationsweg bzw. von der Rotationsgeschwindigkeit ab.

In Weiterbildung der Erfindung weisen die optischen Achsen der optischen Distanzsensoren des zweiten Ringes tangential zur Ringform einen stumpfen Winkel auf.

Dadurch sind die Richtungen der einzelnen optischen Achse je kreisförmiger Anordnung entgegengesetzt bzw. gegenläufig zueinander. Dadurch kann beispielsweise ein engmaschigeres bzw. dichteres Schutzfeld gebildet werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sensorsystem mit optoelektronischen Distanzsensoren;
- Figur 2: ein Sensorsystem mit einem zylindrischen Schutzfeld;
- Figur 2.1: ein Sensorsystem mit einem zylindrischen Schutzfeld und einem zylindrischen Warnfeld;
- Figur 3: ein Sensorsystem mit einem zusätzlichen ringförmigen Schutzfeld und/oder Warnfeld;
- Figur 4: ein Sensorsystem mit einem zylindrischen Schutzfeld und/oder einem zylindrischen Warnfeld mit gegenläufigen Detektionsstrahlen;
- Figur 5: ein Sensorsystem mit einem kegelstumpfförmigen Schutzfeld bzw. einem Schutzfeld in Form eines Rotationshyperboloid;
- Figur 6 und Figur 7: ein zylindrisches Schutzfeld;
- Figur 8 und Figur 9: ein kegelstumpfförmiges Schutzfeld bzw. ein Schutzfeld in Form eines Rotationshyperboloid;
- Figur 10: ein Sensorsystem mit einem kegelstumpfförmigen Schutzfeld und/oder einem kegelstumpfförmigen Warnfeld bzw. einem Schutzfeld in Form eines Rotationshyperboloid;
- Figur 11: ein Sensorsystem mit einem kegelstumpfförmigen Schutzfeld und/oder einem kegelstumpfförmigen Warnfeld mit gegenläufigen Detektionsstrahlen bzw. einem Schutzfeld in Form eines Rotationshyperboloid.

In den nachfolgenden Figuren sind identische Teile mit identischen Bezugszeichen versehen.

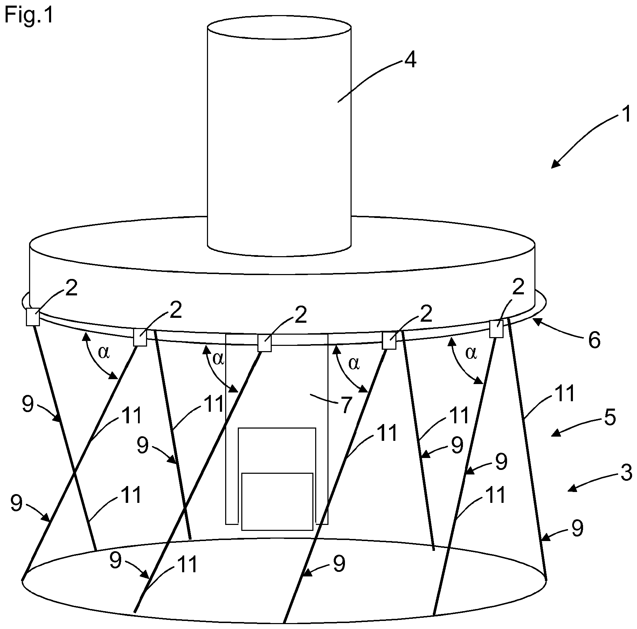

Figur 1 zeigt ein Sensorsystem 1 mit optoelektronischen Distanzsensoren 2 zur Überwachung eines Gefahrenbereichs 3 an einem bewegbaren Maschinenteil 4 mit mindestens einem Schutzfeld 5, wobei die optoelektronischen Distanzsensoren 2 ringförmig in einem ersten Ring 6 an dem bewegbaren Maschinenteil 4 angeordnet sind, wobei an dem bewegbaren Maschinenteil 4 ein Werkzeug 7 angeordnet ist, dadurch gekennzeichnet, dass die optischen Achsen 9 der Detektionsstrahlen 11 der Distanzsensoren 2 jeweils tangential zur Ringform einen spitzen Winkel α aufweisen.

Die mehreren Distanzsensoren 2 sind mit einer Auswerteeinheit zur Auswertung der Distanzsensoren 2 verbunden.

Die Auswerteeinheit erkennt Schutzfeldverletzungen und kann ein sicherheitsgerichtetes Abschaltsignal ausgeben, um eine gefahrbringende Bewegung des Maschinenteils 4 zu stoppen bzw. das Maschinenteil abzubremsen. Das kann z. B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden.

Die Distanzsensoren 2 sind entlang dem Ring 6 beabstandet zueinander angeordnet, wobei die Sensoren 2 ein flächiges Schutzfeld 5 bilden, welches sich beispielsweise gemäß Figur 1 zylinderförmig erstreckt.

Gemäß Figur 1 weisen die Distanzsensoren 2 gleichmäßige Abstände auf. Durch die gleichmäßigen Abstände der Sensoren 2 und eine jeweils identische Winkelausrichtung der Detektionsstrahlen 11 wird eine nahezu gleichmäßige Auflösung innerhalb des Schutzfeldes 16 erreicht.

Die Sensoren 2 sind berührungslos wirkende abstandsmessende Distanzsensoren 2, wobei die Sensoren 2 einen Detektionsstrahl 11 zum Erfassen von Objekten im Überwachungsbereich bzw. Gefahrenbereich 3 aufweisen. Die Detektionsstrahlen 11 bzw. die optischen Achsen 9 der Distanzsensoren sind jeweils in einem spitzen Winkel α jeweils tangential zur Ringform angeordnet.

Die Überwachung erfolgt mit einer Anzahl einfacher, eindimensional tastender Distanzsensoren 2 unter Ausnutzung der Bewegung des Maschinenteils und einer Ausrichtung der Sensoren 2, bei der die Tastrichtung in einem Winkel zur Bewegungsrichtung des Teils steht.

Der spitze Winkel α beträgt beispielsweise 30° bis 85°, vorzugsweise 60 bis 80°, besonders bevorzugt 45°

Der Winkel ist dabei abhängig von dem Abstand der optischen Achsen 9 der Detektionsstrahlen 11 bzw. dem Abstand der Distanzsensoren 2 und der Länge des Überwachungsbereiches. Weiter ist der Abstand der Sensoren 2 abhängig von der zu detektierenden Objektgröße.

Optional ist der Winkel α der Sensoren 2 einstellbar. Der Winkel α kann beispielsweise dynamisch verändert werden.

Zur Erzeugung eines quasi geschlossenen Schutzmantels bzw. Schutzfeldes 5 aus den Distanzsensoren 2 ist eine Anpassung der Sensoranzahl vorgesehen. Es kann beispielsweise die Sensoranzahl verändert werden. Je mehr Distanzsensoren 2 angeordnet werden, desto dichter liegen die optischen Achsen der Distanzsensoren 2 nebeneinander, wodurch das Schutzfeld 5 eine höhere Auflösung aufweist.

Die Wellenlänge des ausgesendeten Lichts der Distanzsensoren 2 ist vorzugsweise eine für das menschliche Auge unsichtbare Wellenlänge, beispielsweise Infrarotlicht.

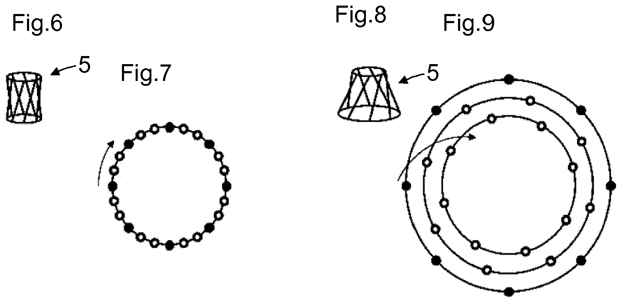

Figur 6 zeigt schematisch das Schutzfeld 5 gemäß Figur 1.

Figur 7 zeigt einen Querschnitt etwa quer zu den optischen Achsen bei einer Annäherung eines flachen Objektes. Dabei wandert ein Lichtfleck der Detektionsstrahlen 11 quasi dynamisch im Ring und verändert so seine örtliche Position.

Die Schrägstellung der optischen Achsen der Distanzsensoren führt gemäß Figur 7 zu einer Dynamisierung der Schutzfeldlücken bzw. Schutzmantellücken und ermöglicht so eine Detektion von Objekten, die sich in diesen Lücken befinden bei Annäherung des Maschinenteils an ein Objekt.

Unter der Annahme, dass eine Bewegung des Schutzfeldes meist in Richtung der Mittelachse des bewegbaren Maschinenteils bzw. senkrecht zur Ebene des Ringes erfolgt und nicht quer zum Schutzfeld, stellt das Sensorsystem sicher, dass ein definiertes Objekt spätestens nach dem Zurücklegen einer bestimmten Strecke des bewegbaren Maschinenteils detektiert wird.

Aufgrund des Winkels zwischen Detektionsstrahl und Bewegungsrichtung verschiebt sich der Taststrahl bei Annäherung des Maschinenteils relativ zu einem statischen Objekt im Gefahrenbereich bzw. Überwachungsbereich.

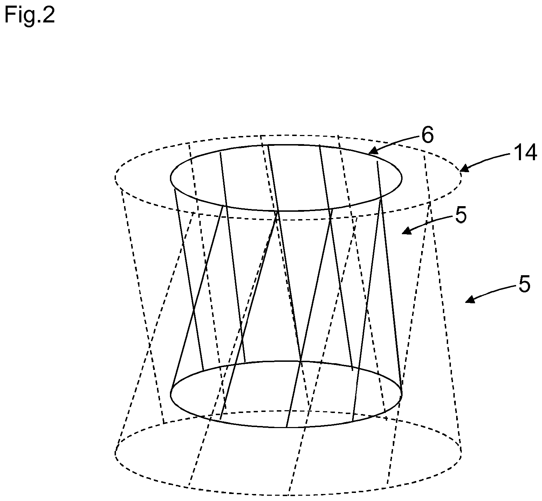

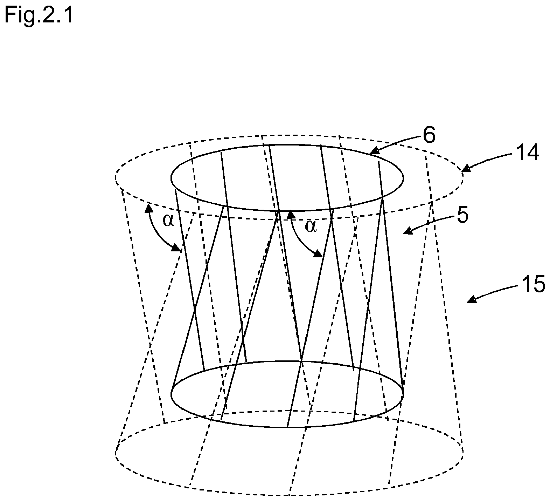

Gemäß Figur 2 sind zweite bzw. weitere optoelektronische Distanzsensoren ringförmig in einem zweiten Ring 14 an dem bewegbaren Maschinenteil angeordnet. Dadurch kann ein zweites Schutzfeld 5 erzeugt werden, welches beispielsweise vor dem ersten Schutzfeld 5 angeordnet ist oder auch zusammen mit den ersten optoelektronischen Distanzsensoren ein komplexeres Schutzfeld 5 bildet. So ist es beispielsweise möglich, ein doppelzylinderförmiges Schutzfeld 5 zu bilden.

Gemäß Figur 2.1 bildet ein Teil der optoelektronischen Distanzsensoren ein Warnfeld 15. Die anderen optoelektronischen Distanzsensoren bilden ein Schutzfeld 5. Dadurch kann ein Warnfeld 15 erzeugt werden, welches beispielsweise vor dem ersten Schutzfeld angeordnet ist.

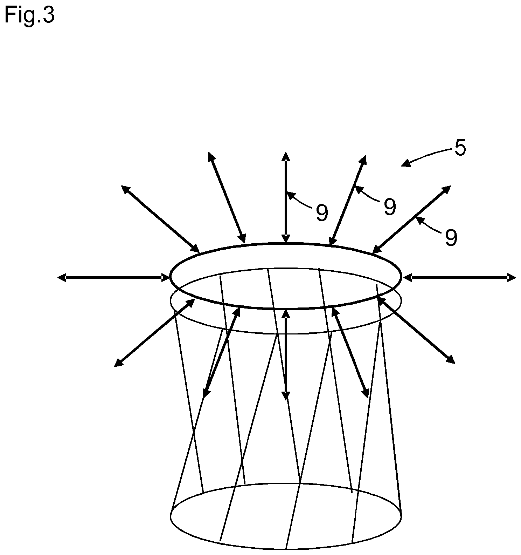

Gemäß Figur 3 sind zusätzlich optischen Achsen 9 der Distanzsensoren sternförmig und parallel zu einer Ebene des Ringes ausgerichtet. Dadurch wird ein ebenes ringförmiges Schutzfeld 5 gebildet, um Kollisionen bei einer Bewegung in Richtung der Ebene des Ringes zu erkennen und zu vermeiden.

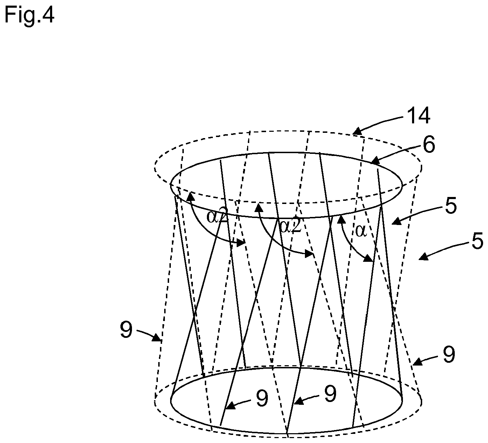

Gemäß Figur 4 sind zweite optoelektronische Distanzsensoren ringförmig in einem zweiten Ring an dem bewegbaren Maschinenteil angeordnet. Dadurch kann ein zweites Schutzfeld 5 erzeugt werden, welches beispielsweise vor dem ersten Schutzfeld 5 angeordnet ist oder auch zusammen mit den ersten optoelektronischen Distanzsensoren ein komplexeres Schutzfeld bildet. So ist es beispielsweise möglich, ein doppelzylinderförmiges Schutzfeld zu bilden.

Gemäß Figur 4 weisen die optischen Achsen der optischen Distanzsensoren des zweiten Ringes 14 tangential zur Ringform einen stumpfen Winkel α2 auf.

Dadurch sind die Richtungen der einzelnen optischen Achse 9 je kreisförmiger Anordnung entgegengesetzt bzw. gegenläufig zueinander. Dadurch kann beispielsweise ein engmaschigeres bzw. dichteres Schutzfeld 5 gebildet werden.

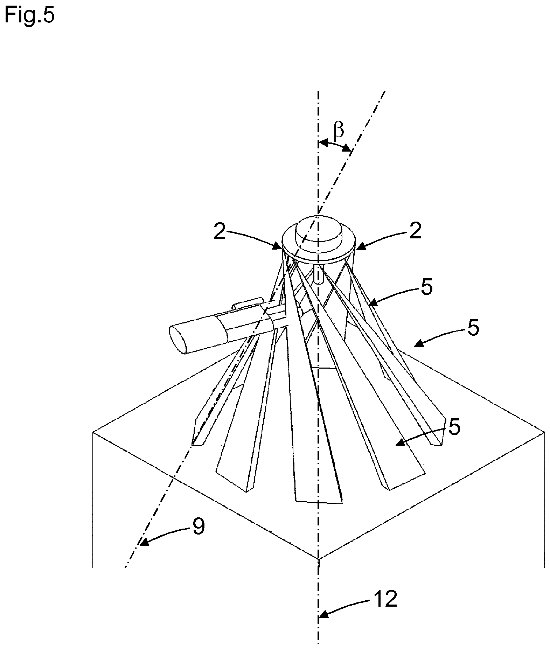

Die Distanzsensoren 2 weisen gemäß Figur 5 jeweils ein flächiges Schutzfeld 5 auf. Das flächige Schutzfeld 5 ist fächerförmig ausgebildet mit einem bestimmten Öffnungswinkel von beispielsweise 2° bis 20°.

Gemäß Figur 5 weisen die optischen Achsen 9 der Distanzsensoren zu einer Mittelachse 12 des bewegbaren Maschinenteils zusätzlich jeweils einen identischen spitzen Winkel β auf. Dadurch wird ein kegelstumpfförmiges Schutzfeld 5 gebildet. Je kleiner der Winkel ist, desto spitzer ist der Kegelstumpf ausgebildet. Je kleiner der Abstand zwischen einem Werkstück/Greifer und Hintergrund ist, desto kleiner sollte die Annäherungsgeschwindigkeit werden und somit auch das umhüllte Schutzvolumen.

Figur 8 zeigt schematisch das Schutzfeld 5 gemäß Figur 5.

Figur 9 zeigt einen Querschnitt etwa quer zu den optischen Achsen bei einer Annäherung eines flachen Objektes. Dabei wandert der Lichtfleck quasi dynamisch im Ring und verändert so seine örtliche Position.

Die Schrägstellung der optischen Achsen der Distanzsensoren führt gemäß Figur 9 zu einer Dynamisierung der Schutzfeldlücken bzw. Schutzmantellücken und ermöglicht so eine Detektion von Objekten, die sich zeitweise in diesen Lücken befinden bei Annäherung des Maschinenteils an ein Objekt.

Unter der Annahme, dass eine Bewegung des Schutzfeldes 5 meist in Richtung der Mittelachse des bewegbaren Maschinenteils bzw. senkrecht zur Ebene des Ringes erfolgt und nicht quer zum Schutzfeld, stellt das Sensorsystem sicher, dass ein definiertes Objekt spätestens nach dem Zurücklegen einer bestimmten Strecke des bewegbaren Maschinenteils detektiert wird.

Aufgrund des Winkels zwischen Detektionsstrahl und Bewegungsrichtung verschiebt sich der Taststrahl bei Annäherung des Maschinenteils relativ zu einem statischen Objekt im Überwachungsbereich.

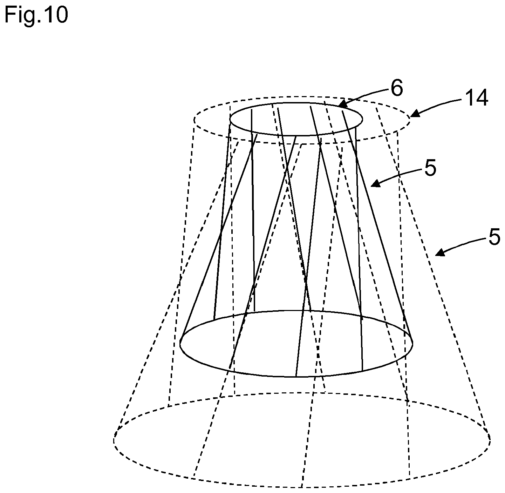

Gemäß Figur 10 sind zweite optoelektronische Distanzsensoren ringförmig in einem zweiten Ring 14 an dem bewegbaren Maschinenteil angeordnet. Dadurch kann ein zweites Schutzfeld 5 erzeugt werden, welches beispielsweise vor dem ersten Schutzfeld angeordnet ist oder auch zusammen mit den ersten optoelektronischen Distanzsensoren ein komplexeres Schutzfeld 5 bildet. So ist es beispielsweise möglich, ein doppelkegelstumpfförmiges Schutzfeld 5 zu bilden.

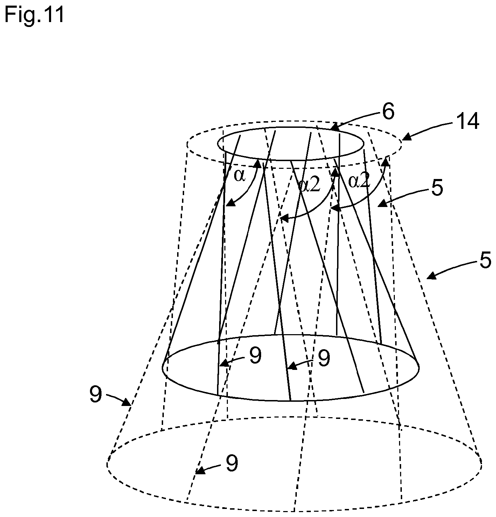

Gemäß Figur 11 sind zweite optoelektronische Distanzsensoren ringförmig in einem zweiten Ring 14 an dem bewegbaren Maschinenteil angeordnet. Dadurch kann ein zweites Schutzfeld 5 erzeugt werden, welches beispielsweise vor dem ersten Schutzfeld 5 angeordnet ist oder auch zusammen mit den ersten optoelektronischen Distanzsensoren ein komplexeres Schutzfeld 5 bildet. So ist es beispielsweise möglich, ein doppelzylinderförmiges Schutzfeld 5 zu bilden.

Gemäß Figur 11 weisen die optischen Achsen der optischen Distanzsensoren des zweiten Ringes 14 tangential zur Ringform einen stumpfen Winkel α2 auf.

Dadurch sind die Richtungen der einzelnen optischen Achse 9 je ringförmiger Anordnung entgegengesetzt bzw. gegenläufig zueinander. Dadurch kann beispielsweise ein engmaschigeres bzw. dichteres Schutzfeld 5 gebildet werden.

Gemäß einer nicht dargestellten Ausführungsform sind die Sensoren rotierbar an dem Ring angeordnet.

Die Rotation der optischen Achsen der Distanzsensoren führt zu einer zusätzlichen Dynamisierung der Schutzfeldlücken bzw. Schutzmantellücken und ermöglicht so eine Detektion von Objekten, die sich in diesen Lücken befinden während der Rotationsbewegung.

Das Sensorsystem sichert, dass ein definiertes Objekt spätestens nach einer bestimmten Zeit detektiert wird. Diese Zeit hängt dann vom Rotationsweg bzw. von der Rotationsgeschwindigkeit ab.

### Bezugszeichen:

- 1: Sensorsystem
- 2: optoelektronische Distanzsensoren
- 3: Gefahrenbereich
- 4: bewegbares Maschinenteil
- 5: Schutzfeld
- 6: erster Ring
- 7: Werkzeug
- 9: optische Achsen
- 11: Detektionsstrahlen
- 12: Mittelachse des bewegbaren Maschinenteils
- 14: zweiter Ring
- 15: Warnfeld
- 17: stumpfer Winkel

- α: spitzer Winkel
- β: spitzer Winkel
- α2: stumpfer Winkel

## Patentansprüche

1. Sensorsystem (1) mit optoelektronischen Distanzsensoren (2) zur Überwachung eines Gefahrenbereichs (3) an einem bewegbaren Maschinenteil (4) mit mindestens einem Schutzfeld (5), wobei die optoelektronischen Distanzsensoren (2) ringförmig in einem ersten Ring (6) an dem bewegbaren Maschinenteil (4) angeordnet sind, wobei an dem bewegbaren Maschinenteil (4) ein Werkzeug (4) und/oder ein Werkstück angeordnet ist,
wobei
die optischen Achsen (9) der Detektionsstrahlen (11) der Distanzsensoren (2) des ersten Rings (6) jeweils tangential zur Ringform einen spitzen Winkel (α) aufweisen,
**dadurch gekennzeichnet, dass** zweite optoelektronische Distanzsensoren (2) ringförmig in einem zweiten Ring (14) an dem bewegbaren Maschinenteil (4) angeordnet sind.

2. Sensorsystem (1) mit optoelektronischen Distanzsensoren (2) zur Überwachung eines Gefahrenbereichs (3) an einem bewegbaren Maschinenteil (4) mit mindestens einem Schutzfeld (5), wobei die optoelektronischen Distanzsensoren (2) ringförmig in einem ersten Ring (6) an dem bewegbaren Maschinenteil (4) angeordnet sind, wobei an dem bewegbaren Maschinenteil (4) ein Werkzeug (4) und/oder ein Werkstück angeordnet ist,
**dadurch gekennzeichnet, dass** die Distanzsensoren (2) rotierbar an dem Ring (6) angeordnet sind.

3. Sensorsystem (1) mit optoelektronischen Distanzsensoren (2) nach Anspruch 1 oder 2, **dadurch gekennzeichnet, dass** die optischen Achsen (9) der Distanzsensoren (2) zu einer Mittelachse (12) des bewegbaren Maschinenteils (4) einen spitzten Winkel (β) aufweisen, so dass ein kegelstumpfförmiges Schutzfeld (5) gebildet ist.

4. Sensorsystem (1) mit optoelektronischen Distanzsensoren (2) nach Anspruch 1 oder 2, **dadurch gekennzeichnet, dass** die optischen Achsen (9) der Distanzsensoren (2) sternförmig, parallel zu einer Ebene des Ringes (6) ausgerichtet sind.

5. Sensorsystem (1) mit optoelektronischen Distanzsensoren (2) nach Anspruch 2, **dadurch gekennzeichnet, dass** zweite optoelektronische Distanzsensoren (2) ringförmig in einem zweiten Ring (14) an dem bewegbaren Maschinenteil (4) angeordnet sind.

6. Sensorsystem (1) mit optoelektronischen Distanzsensoren (2) nach mindestens einem der vorhergehenden Ansprüche, **dadurch gekennzeichnet, dass** die optoelektronischen Distanzsensoren (2) ein Warnfeld (15) und/oder ein Schutzfeld (5) bilden.

7. Sensorsystem (1) mit optoelektronischen Distanzsensoren (2) nach Anspruch 1, **dadurch gekennzeichnet, dass** die Distanzsensoren (2) rotierbar an dem Ring (6) angeordnet sind.

8. Sensorsystem (1) mit optoelektronischen Distanzsensoren (2) nach mindestens einem der vorhergehenden Ansprüche, **dadurch gekennzeichnet, dass** die optischen Achsen (9) der optischen Distanzsensoren (2) des zweiten Ringes (14) tangential zur Ringform einen stumpfen Winkel (α2) aufweisen.

## Claims

1. A sensor system (1) comprising optoelectronic distance sensors (2) for monitoring a hazard zone (3) at a movable machine part (4) having at least one protected field (5), wherein the optoelectronic distance sensors (2) are arranged in annular form in a first ring (6) at the movable machine part (4), and wherein a tool (4) and/or a workpiece is/are arranged at the movable machine part (4),
wherein
the optical axes (9) of the detection beams (11) of the distance sensors (2) of the first ring (6) each have an acute angle (α) tangentially to the annular shape,
**characterized in that** second optoelectronic distance sensors (2) are arranged in annular form in a second ring (14) at the movable machine part (4).

2. A sensor system (1) comprising optoelectronic distance sensors (2) for monitoring a hazard zone (3) at a movable machine part (4) having at least one protected field (5), wherein the optoelectronic distance sensors (2) are arranged in annular form in a first ring (6) at the movable machine part (4), and wherein a tool (4) and/or a workpiece is/are arranged at the movable machine part (4),
**characterized in that** the distance sensors (2) are rotatably arranged at the ring (6).

3. A sensor system (1) comprising optoelectronic distance sensors (2) in accordance with claim 1 or claim 2, **characterized in that** the optical axes (9) of the distance sensors (2) have an acute angle (β) with respect to a center axis (12) of the movable machine part (4) so that a frustoconical protected field (5) is formed.

4. A sensor system (1) comprising optoelectronic distance sensors (2) in accordance with claim 1 or claim 2, **characterized in that** the optical axes (9) of the distance sensors (2) are aligned in star shape in parallel with a plane of the ring (6).

5. A sensor system (1) comprising optoelectronic distance sensors (2) in accordance with claim 2, **characterized in that** second optoelectronic distance sensors (2) are arranged in annular form in a second ring (14) at the movable machine part (4).

6. A sensor system (1) comprising optoelectronic distance sensors (2) in accordance with at least one of the previous claims, **characterized in that** the optoelectronic distance sensors (2) form a warning field (15) and/or a protected field (5).

7. A sensor system (1) comprising optoelectronic distance sensors (2) in accordance with claim 1, **characterized in that** the distance sensors (2) are rotatably arranged at the ring (6).

8. A sensor system (1) comprising optoelectronic distance sensors (2) in accordance with at least one of the previous claims, **characterized in that** the optical axes (9) of the optical distance sensors (2) of the second ring (14) have an obtuse angle (α2) tangentially to the annular shape.

## Revendications

1. Système de capteurs (1) comportant des capteurs de distance optoélectroniques (2) pour surveiller une zone de danger (3) sur une partie de machine mobile (4), présentant au moins un champ de protection (5), dans lequel les capteurs de distance optoélectroniques (2) sont disposés sous forme annulaire en un premier anneau (6) sur la partie de machine mobile (4), un outil (4) et/ou une pièce à œuvrer est disposé(e) sur la partie de machine mobile (4),
les axes optiques (9) des faisceaux de détection (11) des capteurs de distance (2) du premier anneau (6) forment chacun un angle aigu (α) tangentiellement à la forme annulaire,
**caractérisé en ce que** des seconds capteurs de distance optoélectroniques (2) sont disposés sou forme annulaire en un second anneau (14) sur la partie de machine mobile (4).

2. Système de capteurs (1) comportant des capteurs de distance optoélectroniques (2) pour surveiller une zone de danger (3) sur une partie de machine mobile (4), présentant au moins un champ de protection (5), dans lequel les capteurs de distance optoélectroniques (2) sont disposés sous forme annulaire en un premier anneau (6) sur la partie de machine mobile (4), un outil (4) et/ou une pièce à œuvrer est disposé(e) sur la partie de machine mobile (4),
**caractérisé en ce que** les capteurs de distance (2) sont disposés de manière rotative sur l'anneau (6).

3. Système de capteurs (1) comportant des capteurs de distance optoélectroniques (2) selon la revendication 1 ou 2, **caractérisé en ce que** les axes optiques (9) des capteurs de distance (2) présentent un angle aigu (β) par rapport à un axe central (12) de la partie de machine mobile (4), de manière à former un champ de protection (5) de forme tronconique.

4. Système de capteurs (1) comportant des capteurs de distance optoélectroniques (2) selon la revendication 1 ou 2, **caractérisé en ce que** les axes optiques (9) des capteurs de distance (2) sont orientés en forme d'étoile, parallèlement à un plan de l'anneau (6).

5. Système de capteurs (1) comportant des capteurs de distance optoélectroniques (2) selon la revendication 2, **caractérisé en ce que** des seconds capteurs de distance optoélectroniques (2) sont disposés sous forme annulaire en un second anneau (14) sur la partie de machine mobile (4).

6. Système de capteurs (1) comportant des capteurs de distance optoélectroniques (2) selon l'une au moins des revendications précédentes, **caractérisé en ce que** les capteurs de distance optoélectroniques (2) forment un champ d'alerte (15) et/ou un champ de protection (5).

7. Système de capteurs (1) comportant des capteurs de distance optoélectroniques (2) selon la revendication 1, **caractérisé en ce que** les capteurs de distance (2) sont disposés de manière rotative sur l'anneau (6).

8. Système de capteurs (1) comportant des capteurs de distance optoélectroniques (2) selon l'une au moins des revendications précédentes, **caractérisé en ce que** les axes optiques (9) des capteurs de distance optiques (2) du second anneau (14) présentent un angle obtus (α2) tangentiellement à la forme annulaire.
